# EUROPEAN PATENT SPECIFICATION

(11) **EP 0 984 171 B1**
(45) Date of publication and mention of the grant of the patent: **03.03.2004**
(21) Application number: 99306149.8
(22) Date of filing: 03.08.1999
(51) Int. Cl.: F16B 2/06, E04H 15/64

(54) **A fixing member for a tent flap**
Befestigungsglied für eine Zeltlasche
Elément de fixation pour un rabat de tente

(30) Priority: 31.08.1998 FR 9810859
(43) Date of publication of application: 08.03.2000
(73) Proprietor: YKK Europe Limited, London EC1V 8AN (GB)
(72) Inventor: Kato, Hisanori, 60488 Frankfurt am Main (DE); Murata, Koji, 59130 Lambersart (FR)
(74) Representative: Luckhurst, Anthony Henry William

(56) References cited:
- CH-A- 386 191
- US-A- 4 193 413
- US-A- 4 738 424

## Description

The present invention relates to a sheet of material having piping and a fixing member. More specifically, the present invention is concerned with securing tent flaps.

Most modem tents are provided with external flaps which are used, for example, to cover windows or as sun-shades.

Previously, strings or tapes have been sewn onto the flaps so that the flaps can be tied out of the way. If the tapes are tied too tightly they may be very awkward to undo, especially if it rains and the tapes get wet. Also, the stitching may come undone. Instead, a toggle may be attached to the edge of a flap. The toggle co-operates with a loop and so it is easier to undo. The toggle itself is attached to the flap, by tape or string which is sewn onto the flap. This is time consuming during the manufacturing process.

US-A-4193413 shows a sheet of material and a fixing member in which a loop is sewn onto the edge of the sheet of material.

The above problems are addressed by the present invention which provides sheet of material and a fixing member as set fourth in claim 1.

The attachment portion can be slid lengthways onto the edge of the flap, or the piping can be forced through the slot. In order to ease insertion of the flap into the attachment portion, it is preferable if the slot widens as it extends away from the bore.

The hook can engage with a fastener or loop on the tent, or the fixing member can be used to hold a door flap or sun-flap. For example, the fixing member can hook onto straps which are attached to a tree or some other nearby structure.

A particularly preferred type of hook is a toggle.

Preferably, the attachment portion and the hook portion are integral with each other.

The present invention will now be described by way of example with reference to the accompanying drawings, in which :-
Figure 1 shows a plan view of a fixing member of an embodiment of the present invention;
Figure 2 shows a cross section of the fixing member of Figure 1;
Figure 3 shows the fixing member of Figure 1 in position on the edge of a tent-flap;
Figure 4 shows a tent window flap secured using the embodiment of Figure 1; and
Figure 5 shows a sun-shade which is secured using the embodiment of Figure 1.

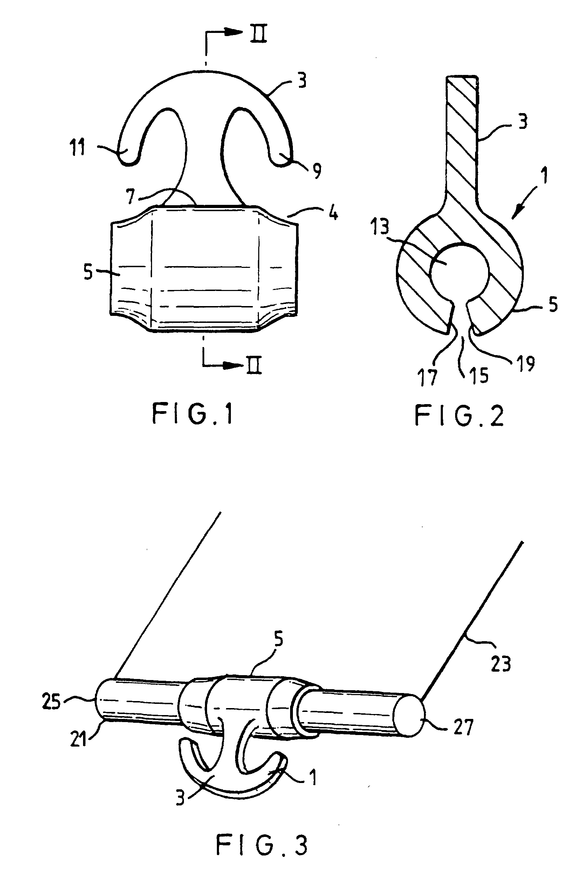

The fixing member 1, shown in Figure 1, has a hook portion 3 and an attachment portion 5. The hook portion 3 is integral with the attachment portion 5 at interface 7.

The hook portion 3 is in the form of a toggle with ends 9,11.

Figure 2 shows a cross section of the fixing member 1 of Figure 1. An inner cylindrical bore 13 extends through the length of the attachment portion 5. A slot 15 is provided in the wall of the bore opposite the hook portion. It can be seen that the walls 17, 19 of slot 15 taper inwards as they extend towards the cylindrical bore 13, such that the slot 15 is narrower at the cylindrical bore 13.

Figure 3 shows the fixing member 1 attached to an edge 21 of tent flap 23 according to the invention. The edge of the tent flap 23 is reinforced with piping 25 so that it is generally thicker than the flap material, and rounded. The attachment portion 5 can be attached to the piping in one of two ways. The attachment portion 5 can be fed on to the piping 25 from one end 27 of piping 25, the flap 23 proper passing through slot 15. Alternatively, the attachment portion 5 can be pushed sideways onto piping 25. If the piping 25 is positioned at the outer end of slot 15 and pushed, the walls 17, 19 of slot 15 compress the piping and there may also be some give in the walls of the bore 13 so that the attachment portion snaps over the piping 25.. The piping 25 is prevented from being pulled radially from the bore 13 by the narrow end of slot 15 at the bore 13. Preferably the bore is dimensioned so that the attachment portion grips the piping and so does not slide easily along the piping.

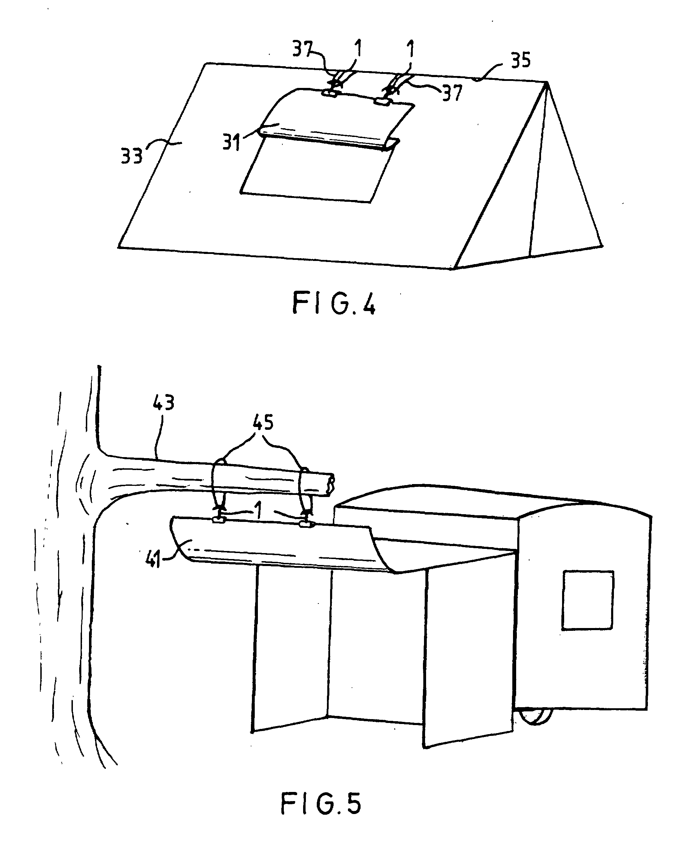

Figure 4 shows fixing member 1 attached to a window flap 31 on tent 33. The fixing members can be hooked into loops 37 located on the outside of the tent.

Figure 5 shows the fixing member 1 used to position a sun-flap 41 on a tree branch 43. The fixing members are hooked onto straps 45 on the tree branch 43.

## Claims

1. A sheet of material having piping (25) at an edge of the sheet (23; 31; 41) and a fixing member (1) mounted on the edge of the sheet (23,31,41), the fixing member (1) comprising a hook portion (3) and an attachment portion (5), wherein the attachment portion (5) has a substantially cylindrical bore (13) which extends through the attachment portion (5) and a slot (15) provided in the side of the bore (13) and extending along the length of the bore, the piping (25) being inserted into the bore (15) with the sheet projecting through the slot (15).

2. A sheet of material according to claim 1, **characterised in that** the slot (15) widens as it extends away from the bore (13).

3. A sheet of material according to claim 1 or 2, **characterised in that** the hook portion (3) is a toggle.

4. A sheet of material according to claim 1,2 or 3, **characterised in that** the hook portion (3) and the attachment portion (5) are integral with one other.

5. A sheet of material as claimed in any one of claims 1 to 4, **characterised in that** the sheet is a tent flap (23; 31).

6. A sheet of material as claimed in any one of claims 1 to 4, **characterised in that** the sheet is a sun flap (41).

## Patentansprüche

1. Materialbahn mit einem Schnurbesatz (25) an einem Rand der Bahn (23; 31; 41) und einem an dem Rand der Bahn (23, 31, 41) angebrachten Befestigungselement (1), welches Befestigungselement (1) einen Hakenabschnitt (3) und einen Befestigungsabschnitt (5) enthält, wobei der. Befestigungsabschnitt (5) eine im wesentlichen zylindrische Bohrung (13) hat, die durch den Befestigungsabschnitt (5) verläuft, und einen Schlitz (15), der in der Seitenwand der Bohrung (13) vorgesehen ist und über die Länge der Bohrung verläuft, wobei der Schnurbesatz (25) in die Bohrung (13) eingeführt wird und die Bahn durch den Schlitz (15) verläuft.

2. Materialbahn nach Anspruch 1, **dadurch gekennzeichnet, dass** der Schlitz (15) sich in seinem Verlauf von der Bohrung (13) weg erweitert.

3. Materialbahn nach Anspruch 1 oder 2, **dadurch gekennzeichnet, dass** der Hakenabschnitt (3) ein Knebel ist.

4. Materialbahn nach Anspruch 1, 2 oder 3, **dadurch gekennzeichnet, dass** der Hakenabschnitt (3) und der Befestigungsabschnitt (5) einstückig miteinander sind.

5. Materialbahn nach einem der Ansprüche 1 bis 4, **dadurch gekennzeichnet, dass** die Bahn eine Zeltklappe (23; 31) ist.

6. Materialbahn nach einem der Ansprüche 1 bis 4, **dadurch gekennzeichnet, dass** die Bahn ein Sonnendach (41) ist.

## Revendications

1. Feuille de matériau comportant un passepoil (25) sur un bord de la feuille (23 ; 31 ; 41) et un élément de fixation (1) monté sur le bord de la feuille (23, 31, 41), l'élément de fixation (1) comprenant une partie crochet (3) et une partie d'accrochage (5), dans laquelle la partie d'accrochage (5) comporte un alésage sensiblement cylindrique (13) qui s'étend à travers la partie d'accrochage (5) et une fente (15) prévue sur le côté de l'alésage (13) et s'étendant sur la longueur de l'alésage, le passepoil (25) étant inséré dans l'alésage (15) avec la feuille faisant saillie par la fente (15).

2. Feuille de matériau selon la revendication 1, **caractérisée en ce que** la fente (15) s'élargit en s'éloignant de l'alésage (13).

3. Feuille de matériau selon la revendication 1 ou 2, **caractérisée en ce que** la partie crochet (3) est une rotule.

4. Feuille de matériau selon la revendication 1, 2 ou 3, **caractérisée en ce que** la partie crochet (3) et la partie d'accrochage (5) sont réalisées d'un seul tenant ensemble.

5. Feuille de matériau selon l'une quelconque des revendications 1 à 4, **caractérisée en ce que** la feuille est un rabat de tente (23 ; 31).

6. Feuille de matériau selon l'une quelconque des revendications 1 à 4, **caractérisée en ce que** la feuille est un rabat d'ombrage (41).
